# EUROPEAN PATENT APPLICATION

(11) **EP 4 553 991 A1**
(43) Date of publication of application: **14.05.2025**
(21) Application number: 23915250.7
(22) Date of filing: 09.01.2023
(51) Int. Cl.: H01M 50/531

(54) **BATTERY CELL, BATTERY AND ELECTRIC DEVICE**

(71) Applicant: Contemporary Amperex Technology (Hong Kong) Limited, Hong Kong (HK)
(72) Inventor: CHEN, Long, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Behr, Wolfgang
(86) International application number: PCT/CN2023/071353
(87) International publication number: WO 2024/148468

(57) **Abstract**

The present disclosure provides a battery cell, a battery, and an electrical equipment, which belongs to the battery technology field. The battery cell includes a shell, an electrode assembly, an electrode column, a current collector component, and a mounting rack. The shell has a first wall. The electrode assembly is accommodated inside the shell, and includes a main body part and a tab. Along the thickness direction of the first wall, the tab is set at one end of the main body part facing the first wall. The electrode column is installed on the first wall. The current collector component connects the electrode column and the tab. Along the thickness direction of the first wall, the mounting rack is set between the first wall and the main body part, and the current collector component is connected to the mounting rack. By setting mounting rack, the current collector component can be fixed and supported, so that the mounting rack can make the current collector component stable when the tab of the electrode assembly is assembled to the shell after being connected to the current collector component. This is beneficial for reducing the assembly difficulty between the current collector component and the electrode column, improving the production efficiency of battery cells, and improving the connection quality between the current collector component and the electrode column.

## Description

### Technical Field

The present disclosure relates to the field of battery technology, in particular to a battery cell, a battery, and an electrical equipment.

### Background Art

In recent years, new energy vehicles have made significant progress. In the field of electric vehicles, power batteries play an irreplaceable and important role as the power source of electric vehicles. With the vigorous promotion of new energy vehicles, the demand for power battery products is also increasing. As a core component of new energy vehicles, batteries have high requirements in terms of use safety and service life. The battery cell of the battery is generally obtained by assembling a positive electrode plate, a negative electrode plate, and a separator to an electrode assembly (bare cell) by means of winding or stacking, then putting the electrode assembly into a shell, and finally injecting the electrolyte. Among them, the electrode assembly of the battery cell usually needs to be connected to the electrode column set on the shell through a current collector component to achieve the input or output of electrical energy of the battery cell. However, the assembly difficulty between the current collector component and the electrode column of the battery cell in prior art is relatively high, which leads to problems such as low production efficiency and poor production quality of the battery cell.

### Summary

The embodiments of the present disclosure provide a battery cell, a battery, and an electrical equipment, which can effectively improve the production efficiency and the production quality of the battery cell.

In the first aspect, the embodiments of the present disclosure provide a battery cell, comprising a shell, an electrode assembly, an electrode column, a current collector component, and a mounting rack, wherein the shell has a first wall; the electrode assembly is housed within the shell, wherein the electrode assembly comprises a main body part and a tab; along the thickness direction of the first wall, the tab is arranged at one end of the main body part facing the first wall; the electrode column is installed on the first wall; the current collector component connects the electrode column and the tab; and along the thickness direction of the first wall, the mounting rack is set between the first wall and the main body, and the current collector component is connected to the mounting rack.

In the above technical solution, a mounting rack is provided inside the shell, and the mounting rack is located between the first wall and the main body part of the electrode assembly in the thickness direction of the first wall. By connecting the current collector component to the mounting rack, it can fix and support the current collector component. On the one hand, it can reduce the phenomenon of shaking or displacement of the current collector component during use, which is conducive to reducing the risk of connection failure between the current collector component and the electrode column and the tab. On the other hand, it can stabilize the current collector component through the mounting rack when the tab of the electrode assembly is assembled into the shell after being connected to the current collector component, so as to facilitate the assembly and connection between the current collector component and the electrode column installed on the first wall, which is conducive to reducing the difficulty of assembly between the current collector component and the electrode column, so as to improve the production efficiency of battery cells and facilitate the improvement of the connection quality between the current collector component and the electrode column, which ensures the production quality of battery cells.

In some embodiments, the mounting rack is provided with a mounting hole, wherein the mounting hole penetrates the mounting rack along the thickness direction of the first wall, wherein at least a portion of the current collector component is accommodated within the mounting hole.

In the above technical solution, the mounting hole is provided on the mounting rack to accommodate the current collector component, and the mounting hole penetrates both sides of the mounting rack along the thickness direction of the first wall, so as to facilitate the connection of the current collector component with the electrode columns and tabs located on both sides of the mounting rack, thereby further reducing the assembly difficulty of battery cells and improving the production efficiency of battery cells.

In some embodiments, a slot is provided on the wall surface of the mounting hole, and the current collector component comprises a first connecting part, wherein at least a portion of the first connecting part is inserted into the slot.

In the above technical solution, a slot is provided on the wall surface of the mounting hole for inserting the first connecting part of the current collector component, so as to connect the current collector component to the wall surface of the mounting hole and fix the current collector component on the mounting rack. This structure is convenient for accommodating the current collector component into the mounting hole and for assembling the current collector component.

In some embodiments, the mounting rack is injection molded to connect the first connecting part to a wall surface of the slot.

In the above technical solution, by setting the mounting rack to be injection molded on the current collector component, the first connecting part can be connected to the wall surface of the slot, and a part of the mounting rack is wrapped around the outer side of a part of the first connecting part, so that the mounting rack forms a slot in the area where the first connecting part is wrapped, that is, the first connecting part and the wall surface of the slot are bonded together. The battery cell using this structure can effectively improve the stability and reliability of the connection between the mounting rack and the current collector component, thereby reducing the risk of shaking or detachment of the current collector component.

In some embodiments, the current collector component further comprises a second connecting part, wherein the second connecting part is connected to the first connecting part, and the second connecting part is connected to the tab; and a portion of the first connecting part is inserted into the slot, and the portion of the first connecting part located outside the slot is connected to the electrode column.

In the above technical solution, the current collector component is provided with a first connecting part connected to the electrode column and a second connecting part connected to the tab, so as to avoid the phenomenon of mutual interference between the area where the current collector component is connected to the tab and the area where the current collector component is connected to the electrode column. In addition, by connecting the portion of the first connecting part outside the slot to the electrode column, the area where the electrode column and the current collector component are connected to each other is closer to the position where the current collector component and the mounting rack are connected to each other, which is conducive to improving the stability and reliability of the assembly between the electrode column and the current collector component, and enhancing the connection quality between the electrode column and the current collector component.

In some embodiments, the second connecting part is located within the mounting hole.

In the above technical solution, by placing the second connecting part as a whole in the mounting hole, it is convenient for the second connecting part to be connected to the tab of the electrode assembly and can reduce the interference phenomenon between the second connecting part and the main body part of the electrode assembly.

In some embodiments, along the thickness direction of the first wall, the tab abuts against one side of the second connecting part facing the main body part.

In the above technical solution, the tab is pressed against one side of the second connecting part facing the main body part in the thickness direction of the first wall, so that the tab can provide certain support to the second connecting part, and can provide certain support to the current collector component when the electrode column is assembled and connected to the first connecting part of the current collector component. This is conducive to further improving the stability of the current collector component connected to the mounting rack, reducing the deformation phenomenon of the current collector component when assembled with the electrode column, and effectively improving the connection quality between the electrode column and the first connecting part of the current collector component.

In some embodiments, along the thickness direction of the first wall, the second connecting part is further away from the main body part than the first connecting part.

In the above technical solution, by setting the second connecting part of the current collector component to be further away from the main body part in the thickness direction of the first wall compared to the first connecting part, the current collector component can form a space for accommodating the tab on one side of the second connecting part facing the main body part, which is conducive to avoiding the phenomenon of the tab being crushed by the second connecting part.

In some embodiments, the battery cell further comprises a first insulating member, wherein along the thickness direction of the first wall, the first insulating member is arranged between the mounting rack and the first wall to insulate and isolate the current collector component from the first wall, wherein along the thickness direction of the first wall, a height of the electrode column protruding from a surface of the first insulating member facing the main body part is H₁, and a height of the second connecting part protruding from a surface of the first connecting part facing away from the main body part is H₂, satisfying a condition of H₁ ≥ H₂.

In the above technical solution, in the thickness direction of the first wall, the size of the electrode column extending out of the surface of the first insulating member facing the main body part is set to be greater than or equal to the size of the second connecting part protruding from the surface of the first connecting part facing away from the main body part. That is to say, when the electrode assembly is assembled into the shell, the electrode column will first abut against the first connecting part of the current collector component, so that there is a gap of size greater than or equal to zero between the second connecting part and the first insulating member, which is conducive to ensuring the connection quality between the electrode column and the first connecting part, and avoiding the phenomenon of connection failure or inadequate connection due to the gap between the electrode column and the first connecting part.

In some embodiments, along the thickness direction of the first wall, a distance between a surface of the mounting rack facing away from the main body part and the surface of the first connecting part facing away from the main body part is H₃, satisfying a condition of H₁ ≥ H₃.

In the above technical solution, in the thickness direction of the first wall, the distance between the surface of the mounting rack facing away from the main body part and the surface of the first connecting part facing away from the main body part is set to be less than or equal to the size of the electrode column extending out of the surface of the first insulating member facing the main body part. That is to say, the size of the electrode column extending out of the surface of the first insulating member facing the main body part is greater than or equal to the distance between the surface of the mounting rack facing the first insulating member and the surface of the first connecting part facing the first insulating member. This ensures that when the electrode assembly is assembled into the shell, the electrode column will first abut against the first connecting part of the current collector component, resulting in a gap between the mounting rack and the first insulating member with a size greater than or equal to zero, which is conducive to ensuring the connection quality between the electrode column and the first connecting part, so as to avoid the phenomenon of connection failure or inadequate connection due to the gap between the electrode column and the first connecting part.

In some embodiments, two electrode assemblies are provided, and the two electrode assemblies are stacked along a first direction, wherein the first direction is perpendicular to the thickness direction of the first wall; and the current collector component comprises two second connecting parts, wherein along the first direction, the two second connecting parts are respectively connected to both sides of the first connecting part, and the two second connecting parts are respectively connected to tabs of the two electrode assemblies.

In the above technical solution, two electrode assemblies accommodated inside the shell are provided, and the two electrode assemblies are arranged along the first direction; and correspondingly, two second connecting parts are provided on the current collector component, and the two second connecting parts are respectively connected to both sides of the first connecting part in the first direction, so as to achieve the simultaneous connection of the current collector component with the tabs of the two electrode assemblies, and to achieve parallel connection between the two electrode assemblies.

In some embodiments, a size of the mounting hole in the first direction is W₁, and a distance between outer edges of the two second connecting parts that are facing away from each other in the first direction is W₂, satisfying a condition of W₁>W₂.

In the above technical solution, by setting the distance between the outer edges of the two second connecting parts that are facing away from each other in the first direction to be smaller than the size of the mounting hole in the first direction, that is, the size of the current collector component in the first direction is smaller than the size of the mounting hole, it is beneficial to ensure that the current collector component is assembled into the mounting hole in the first direction and avoid the interference phenomenon between the current collector component and the wall surface of the mounting hole in the first direction.

In some embodiments, one end of the first connecting part in a second direction is inserted into the slot, a size of the mounting hole in the second direction is L₁, and a size of the second connecting part in the second direction is L₂, satisfying a condition of L₁>L₂, wherein the first direction, the second direction, and the thickness direction of the first wall are perpendicular to each other.

In the above technical solution, by setting the size of the second connecting part in the second direction to be smaller than the size of the mounting hole, the second connecting part can be assembled into the mounting hole after the first connecting part is inserted into the groove along the second direction, thereby avoiding the interference phenomenon between the second connecting part and the wall surface of the mounting hole in the second direction.

In some embodiments, both the current collector components and the electrode columns are provided in a number of two, and the mounting rack is provided with two mounting holes, wherein the current collector components, the mounting holes, and the electrode columns correspond one-to-one; and the electrode assembly has two tabs with opposite polarities, wherein the two tabs are respectively connected to the two current collector components.

In the above technical solution, by setting two current collector components and two mounting holes on the mounting rack, and assembling each current collector component into one mounting hole, it is possible to achieve the stable installation of two current collector components with opposite polarities on the mounting rack at the same time, so as to facilitate the assembly of the two current collector components and two electrode columns.

**In** some embodiments, the mounting rack has a first surface facing the main body part along the thickness direction of the first wall, and the first surface abuts against the main body part.

**In** the above technical solution, by pressing the first surface of the mounting rack facing the main body part against the main body part of the electrode assembly, the main body part can provide support for the mounting rack, thereby improving the structural stability of the mounting rack assembled between the main body part and the first wall, further avoiding the phenomenon of shaking or displacement of the current collector component inside the shell, and thus facilitating the further improvement of the connection quality between the current collector component and the electrode column.

In some embodiments, an avoidance groove is provided on the first surface, wherein the avoidance groove is configured for accommodating the tab.

In the above technical solution, an avoidance groove for accommodating the tab is provided on the first surface of the mounting rack facing the main body part to avoid the pressing phenomenon caused by the mounting rack on the tab, thereby reducing the risk of damage of the tab or the tab reversely inserting into the main body part.

In some embodiments, the shell comprises a casing and an end cover, wherein an interior of the casing forms an accommodating cavity with an opening, and the electrode assembly is accommodated within the accommodating cavity; and the end cover covers the opening, wherein the casing comprises the first wall.

In the above technical solution, the casing includes a first wall, that is, the electrode column is installed on the casing, so that the current collector component can achieve electrical connection between the electrode column and the electrode assembly after connecting the electrode column and the tab of the electrode assembly, to achieve the input or output of electrical energy of the battery cell. The battery cell using this structure can avoid the phenomenon of force being transmitted to the casing and end cover through the electrode column when the busbar component pulls or twists the electrode column, thereby effectively avoiding the situation of pulling between the end cover and the casing, reducing the risk of electrolyte leakage caused by connection failure between the end cover and the casing, and thus improving the use safety and service life of the battery cell during use.

In some embodiments, the casing is integrally formed.

In the above technical solution, the casing is a one-piece structure, which can enhance the structural strength of the casing itself, so as to avoid the phenomenon of cracking the casing caused by transmitting force through the electrode column to the casing when the busbar component pulls or twists the electrode column, and effectively reduce the risk of electrolyte leakage of the battery cell during use, which is conducive to improving the use safety and service life of the battery cell.

In some embodiments, the casing further comprises a second wall, wherein the second wall is arranged around the first wall, and along the thickness direction of the first wall, one end of the second wall is connected to the first wall, and the other end forms the opening, wherein the second wall and the first wall jointly define the accommodating cavity, and the first wall is arranged opposite to the end cover.

In the above technical solution, the end cover covers the opening formed by the second wall, and the end cover is arranged opposite to the first wall in the thickness direction of the first wall. This structure can make the first wall equipped with the electrode column away from the end cover of the shell, so that there is no direct connection relationship between the first wall and the end cover. This can further avoid the phenomenon of the generated force acting on the end cover when the busbar component pulls or twists the electrode column, thereby reducing the risk of connection failure between the end cover and the casing, and further reducing the risk of electrolyte leakage of the battery cell during use.

In some embodiments, the battery cell further comprises a first insulating member; along the thickness direction of the first wall, the first insulating member is arranged between the mounting rack and the first wall to insulate and isolate the current collector component from the first wall.

In the above technical solution, a first insulating member is also provided between the mounting rack and the first wall, so as to provide insulation and isolation between the current collector component and the first wall through the first insulating member, thereby effectively reducing the risk of short circuit between the current collector component and the first wall, and improving the use safety of battery cell.

In the second aspect, the embodiment of the present disclosure also provides a battery, including aforementioned battery cell.

In the third aspect, the embodiment of the present disclosure also provides an electrical equipment, including the aforementioned battery.

### Brief Description of Drawings

In order to more clearly illustrate technical solutions of embodiments of the present disclosure, drawings required for use in the embodiments will be described briefly below. It should be understood that the following drawings are merely illustrative of some embodiments of the present disclosure, which therefore should not be understood as a limitation to the scope. For those of ordinary skill in the art, other related drawings can also be obtained according to these drawings without any inventive effort.
FIG. 1 is a schematic view of the structure of the vehicle provided in some embodiments of the present disclosure;
FIG. 2 is a structural explosion view of the battery provided in some embodiments of the present disclosure;
FIG. 3 is a schematic view of a structure of the battery cell provided in some embodiments of the present disclosure;
FIG. 4 is a structural explosion view of battery cell provided in some embodiments of the present disclosure;
FIG. 5 is a sectional view of the battery cell provided in some embodiments of the present disclosure;
FIG. 6 is a partial enlarged view of the A position of the battery cell shown in FIG. 5;
FIG. 7 is a connection schematic view of the current collector component and the mounting rack provided in some embodiments of the present disclosure;
FIG. 8 is a schematic view of the structure of the mounting rack provided in some embodiments of the present disclosure;
FIG. 9 is a structural schematic view of the current collector component provided in some embodiments of the present disclosure;
FIG. 10 is a front view of the current collector component in the second direction provided in some embodiments of the present disclosure;
FIG. 11 is a top view of the current collector component connected to the mounting rack provided in some embodiments of the present disclosure; and
FIG. 12 is a front view of the mounting rack in the first direction provided in some embodiments of the present disclosure.

Reference signs: 1000-vehicle; 100-battery; 10-box; 11-first box body; 12-second box body; 20-battery cell; 21-shell; 211-casing; 2111-first wall; 2111a-lead out hole; 2112-accommodating cavity; 2113-opening; 2114-second wall; 212-end cover; 22-electrode assembly; 221-main body part; 222-tab; 23-electrode column; 24-current collector component; 241-first connecting part; 242-second connecting part; 25-mounting rack; 251-mounting hole; 2511-slot; 252-first surface; 2521-avoidance groove; 26-first insulating member; 27-second insulating member; 28-sealing member; 29-third insulating member; 200-controller; 300-motor; X-thickness direction of the first wall; Y-first direction; Z-second direction.

### Detailed Description of Embodiments

In order to make the objectives, technical solutions and advantages of the embodiments of the present disclosure clearer, the technical solutions in the embodiments of the present disclosure will be described clearly below with reference to the drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions. The terms "first", "second", etc. in the description and the claims of the present disclosure or the drawings are used to distinguish different objects, rather than describing specific sequences or primary and secondary relationships.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment.

In the description of the present disclosure, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present disclosure may be understood according to specific circumstances.

The term "and/or" in the present disclosure is only a description for the association relationship of the associated object, indicating that there can be three types of relationships. For example, A and/or B can indicate three conditions: the presence of only A, the presence of both A and B, and the presence of only B. In addition, the character "/" in the present disclosure generally indicates that the associated objects before and after have an "or" relationship.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The term "multiple (a plurality of)" in the present disclosure refers to two or more (including two).

In the present disclosure, the battery cell can include a lithium ion secondary battery, a lithium ion primary battery, a lithium sulfur battery, a sodium ion battery or a magnesium ion battery, etc., which is not limited by the embodiments of the present disclosure. The battery cell can be cylindrical, flat, or rectangular, or be of other shapes, which is also not limited by the embodiments of the present disclosure. Battery cells are generally divided into three types according to the packaging method: cylindrical battery cell, square battery cell, and soft pack battery cell, which is also not limited by the embodiments of the present disclosure.

The battery mentioned in the embodiments of the present disclosure refers to a single physical module that includes one or more battery cells to provide higher voltage and capacity. For example, the batteries mentioned in the present disclosure may include battery modules or battery packs, etc. Batteries generally include boxes used to encapsulate one or more battery cells or multiple battery modules. The box can prevent liquids or other foreign objects from affecting the charging or discharging of battery cells.

The battery cell includes a shell, electrode assemblies, and electrolyte, and the shell accommodates the electrode assemblies and electrolyte. The electrode assembly is composed of a positive electrode plate, a negative electrode plate, and a separator. Battery cells mainly rely on metal ions moving between the positive and negative electrode plates to operate. The positive electrode plate includes a positive electrode current collector and a positive electrode active substance layer. The positive electrode active substance layer is coated on the surface of the positive electrode current collector. The part of the positive electrode current collector without the positive electrode active substance layer is used as the positive electrode tab, so as to input or output electrical energy from the positive electrode plate through the positive electrode tab. Taking lithium ion batteries as an example, the material for the positive electrode current collector can be aluminum, and the active substance of the positive electrode can be lithium cobalt oxide (lithium cobaltate), lithium iron phosphate, ternary lithium, or lithium manganese oxide (lithium manganate). The negative electrode plate includes a negative electrode current collector and a negative electrode active substance layer. The negative electrode active substance layer is coated on the surface of the negative electrode current collector. The part of the negative electrode current collector without the negative electrode active substance layer is used as the negative electrode tab, so as to input or output electrical energy from the negative electrode plate through the negative electrode tab. The material for the negative electrode current collector can be copper, and the active substance of the negative electrode can be carbon, silicon or the like. In order to ensure that fusing does not occur under a high current, multiple positive electrode tabs are provided and stacked together, and multiple negative electrode tabs are provided and stacked together.

The material of the separator can be PP (polypropylene) or PE (polyethylene), etc. In addition, the electrode assembly can be of a wound structure or a laminated structure (stacked structure), which is not limited by the embodiments of the present disclosure.

Batteries have outstanding advantages such as high energy density, low environmental pollution, high power density, long service life, wide adaptability, and low self discharge coefficient, which are an important component of the development of new energy now. The battery cell of the battery is generally obtained by assembling a positive electrode plate, a negative electrode plate, and a separator to an electrode assembly (bare cell) by means of winding or stacking, then putting the electrode assembly into a shell, and finally injecting the electrolyte. However, with the continuous development of battery technology, higher requirements have been put forward for the safety performance and service life of batteries.

For general battery cells, the shell of the battery cell usually includes a casing and an end cover. The end cover covers the opening of the casing. In order to facilitate the assembly of the battery cell, the electrode column is usually assembled to the end cover of the battery cell, so that when the end cover covers the casing, the electrode column can be welded to the tab of the electrode assembly first through the current collector component set in the casing to achieve electrical connection between the electrode column and the electrode assembly. Therefore, the electrode column can be used as the output pole of the battery cell to achieve the input or output of electrical energy of the battery cell. Finally, the end cover is connected to the casing.

The inventor found that there are usually busbar components installed inside the battery, which can be connected to the electrode columns of the battery cell to achieve series, parallel or hybrid connection between multiple battery cells. In the later use of the battery having this structure, due to the using conditions such as shaking or movement of the battery cells, the busbar components connected to the electrode columns of the battery cell will exert a certain pulling or twisting force on the electrode columns. Moreover, since the electrode columns are installed on the end cover, the force exerted by the busbar components on the electrode columns will be transmitted to the end cover through the electrode columns, thereby causing a certain pulling or twisting for the end covers, which can easily lead to connection failure such as weld cracking between the end cover and the casing due to long-term fatigue stress. This phenomenon leads to a shorter lifespan of battery cells, and it also poses safety hazards such as electrolyte leakage during the use of battery cells, which is not conducive to consumer use.

In order to solve the problem of connection failure such as weld cracking between the end cover and the casing due to long-term fatigue stress, in prior art, by assembling the electrode column to the casing, the pulling force or twisting force of the busbar component acting on the electrode column will not be transmitted between the end cover and the casing. This can effectively avoid the phenomenon of connection failure such as weld cracking between the end cover and the casing due to long-term fatigue stress, so as to improve the service life of the battery cell, and effectively reduce the risk of electrolyte leakage of the battery cell. However, the battery cell having this structure requires the electrode assembly to be assembled into the casing before the current collector component and the electrode column can be assembled and connected to each other, due to the electrode column being placed on the casing. This makes the connection between the current collector component and the electrode column difficult and the connection quality poor, resulting in low production efficiency and poor production quality of the battery cell.

Based on the above considerations, in order to solve the problem of low production efficiency and poor production quality of battery cells, the inventor has conducted in-depth research and designed a battery cell, which includes a shell, electrode assembly, electrode column, current collector component, and mounting rack. The shell has a first wall. The electrode assembly is accommodated inside the shell, and includes a main body part and a tab. Along the thickness direction of the first wall, the tab is set at one end of the main body part facing the first wall. The electrode column is installed on the first wall. The current collector component connects the electrode column and the tab. Along the thickness direction of the first wall, the mounting rack is set between the first wall and the main body part, and the current collector component is connected to the mounting rack.

In battery cell having this structure, a mounting rack is provided inside the shell, and the mounting rack is located between the first wall and the main body part of the electrode assembly in the thickness direction of the first wall. By connecting the current collector component to the mounting rack, it can fix and support the current collector component. On the one hand, it can reduce the phenomenon of shaking or displacement of the current collector component during use, which is conducive to reducing the risk of connection failure between the current collector component and the electrode column and the tab. On the other hand, it can stabilize the current collector component through the mounting rack when the tab of the electrode assembly is assembled into the shell after being connected to the current collector component, so as to facilitate the assembly and connection between the current collector component and the electrode column installed on the first wall, which is conducive to reducing the difficulty of assembly between the current collector component and the electrode column, so as to improve the production efficiency of battery cells and facilitate the improvement of the connection quality between the current collector component and the electrode column, which ensures the production quality of battery cells.

The battery cell disclosed in the embodiments of the present disclosure can be used in, but is not limited to, electrical equipment such as vehicles, ships, or aircraft. The power supply system of the electrical equipment can be composed of battery cells, batteries, etc. disclosed in the present disclosure, which is conducive to solving the problem of high connection difficult and poor connection quality between the current collector components and the electrode columns of the battery cells, and improving the production efficiency and production quality of the battery cells.

The embodiment of the present disclosure provides an electrical equipment using a battery as a power source, which can be but is not limited to mobile phones, tablet computers, laptops, electric toys, electric tools, electromobile, electric vehicles, ships, spacecraft, and so on. In the above, electric toys can include fixed or mobile electric toys, such as game consoles, electric car toys, electric ship toys and electric aircraft toys, and spacecraft can include aircraft, rockets, space shuttles and spaceships, etc.

For the convenience of explanation, the following embodiment takes an electrical device in one embodiment of the present disclosure being the vehicle 1000 as an example to explain.

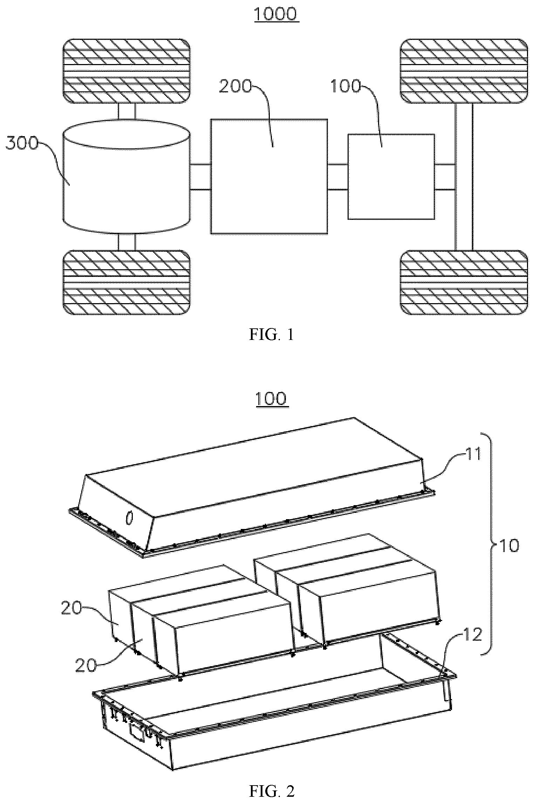

Referring to FIG. 1, FIG. 1 is a structural schematic view of the vehicle 1000 provided in some embodiments of the present disclosure. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000. The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

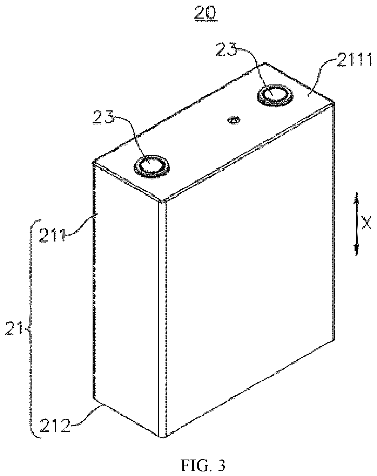

Referring to FIGS. 2 and 3, FIG. 2 is a structural explosion view of the battery 100 provided in some embodiments of the present disclosure; and FIG. 3 is a schematic view of a structure of the battery cell 20 provided in some embodiments of the present disclosure. The battery 100 includes a box 10 and a battery cell 20, which is accommodated within the box 10. In the above, the box 10 is used to provide assembly space for the battery cell 20, and the box 10 can be of various structures. In some embodiments, the box 10 may include a first box body 11 and a second box body 12, with the first box body 11 and the second box body 12 covering each other. The first box body 11 and the second box body 12 jointly define an assembly space for accommodating the battery cell 20. The second box body 12 can be in a hollow structure with an opening at one end, the first box body 11 can be in a plate-shaped structure, and the first box body 11 is covered on the opening side of the second box body 12 to jointly define the assembly space by the first box body 11 and the second box body 12. The first box body 11 and the second box body 12 can also both be in hollow structure with an opening on one side, and the opening side of the first box body 11 is covered on the opening side of the second box body 12. Of course, the box 10 formed by the first box body 11 and the second box body 12 can be of various shapes, such as cylinder, cuboid, etc.

In the battery 100, the battery cells 20 can be multiple, and multiple battery cells 20 can be connected in series, parallel, or hybrid. Hybrid connection means that both series connection and parallel connection exist among multiple battery cells 20. Multiple battery cells 20 can be directly connected in series, parallel, or hybrid together, and then the whole composed of multiple battery cells 20 can be accommodated in the box 10. Of course, the battery 100 can also be in the form of a battery module composed of multiple battery cells 20 that are first connected in series, parallel, or hybrid. Multiple battery modules are then connected in series, parallel, or hybrid to form a whole and accommodated in the box 10. The battery 100 may also include other structures, for example, the battery 100 may also include a busbar component for achieving electrical connection between multiple battery cells 20.

In the above, each battery cell 20 can be a secondary battery or a primary battery; and can also be a lithium sulfur battery, sodium ion battery, or magnesium ion battery, but is not limited thereto. The battery cell 20 can be cylindrical, flat, or rectangular, or be of other shapes. As an example, in FIG. 3, the battery cell 20 is in a cuboid structure.

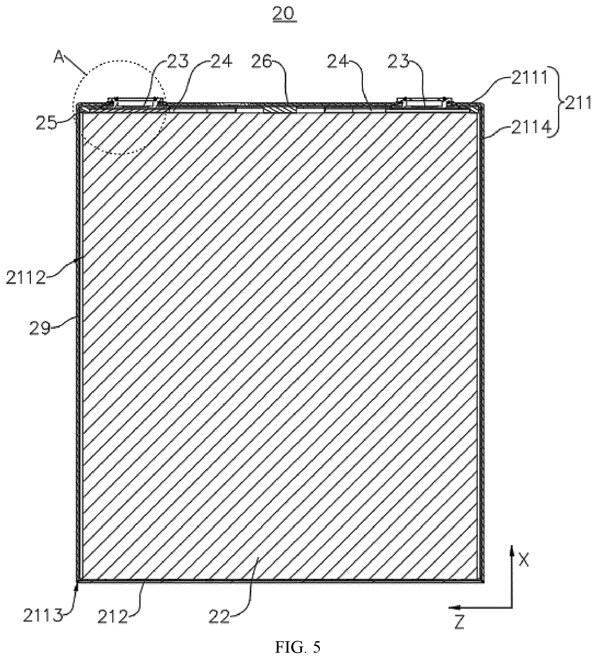

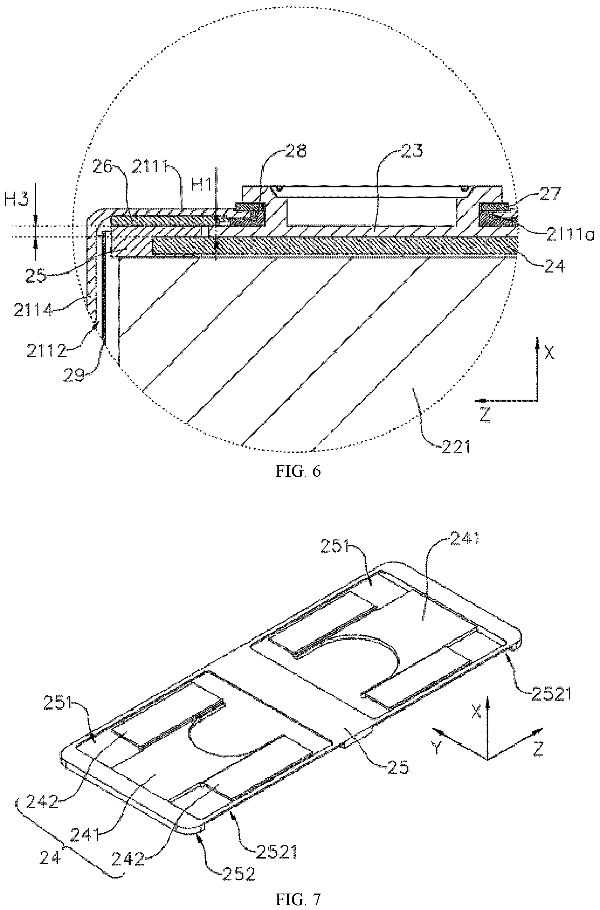

According to some embodiments of the present disclosure, referring to FIG. 3, and further referring to FIGS. 4, 5 and 6, FIG. 4 is a structural explosion view of battery cell 20 provided in some embodiments of the present disclosure; FIG. 5 is a sectional view of the battery cell 20 provided in some embodiments of the present disclosure; and FIG. 6 is a partial enlarged view of the A position of the battery cell 20 shown in FIG. 5. The present disclosure provides a battery cell 20, which comprises a shell 21, an electrode assembly 22, an electrode column 23, a current collector component 24, and a mounting rack 25. The shell 21 has a first wall 2111, and the electrode assembly 22 is accommodated inside the shell 21. The electrode assembly 22 includes a main body part 221 and a tab 222. Along the thickness direction X of the first wall, the tab 222 is provided at one end of the main body part 221 facing the first wall 2111. The electrode column 23 is installed on the first wall 2111, and the current collector component 24 connects the electrode column 23 and the tab 222. Along the thickness direction X of the first wall, the mounting rack 25 is set between the first wall 2111 and the main body part 221, and the current collector component 24 is connected to the mounting rack 25.

The shell 21 can also be used to accommodate electrolyte, such as electrolyte solution. The shell 21 can be in various structural forms. The material of shell 21 can also be various, such as copper, iron, aluminum, steel, aluminum alloy, etc.

In some embodiments, the shell 21 may include a casing 211 and an end cover 212. The interior of the casing 211 is provided with an accommodating cavity 2112, and the accommodating cavity 2112 has an opening 2113, that is, the casing 211 is in a hollow structure with one end opened. The end cover 212 covers the opening 2113 of the casing 211 and forms a sealed connection to form a sealed space for accommodating the electrode assembly 22 and electrolyte.

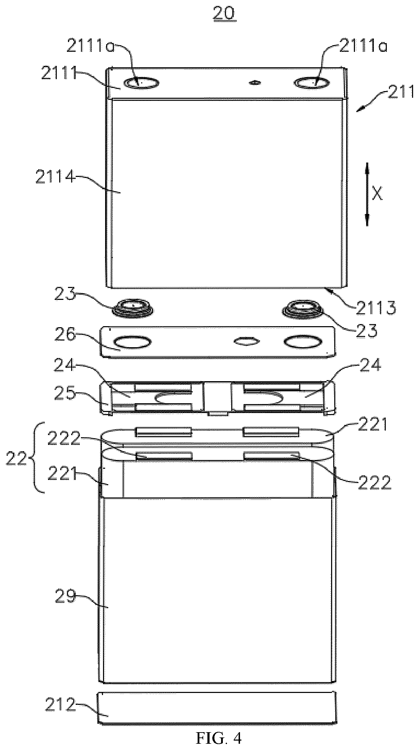

Optionally, the first wall 2111 used for installing the electrode column 23 can be the end cover 212 or one wall of the casing 211. By way of example, in FIGS. 4 and 5, the first wall 2111 is the wall of the casing 211 arranged opposite to the end cover 212 in the thickness direction X of the first wall. However, in other embodiments, the first wall 2111 may also be the wall of the casing 211 adjacent to and abutting against the end cover 212.

When assembling battery cell 20, the electrode assembly 22 can be first placed into the casing 211, and electrolyte can be filled into the casing 211. Then, the end cover 212 covers the opening 2113 of the casing 211.

The casing 211 can be of various shapes, such as cylinder, cuboid, etc. The shape of casing 211 can be determined based on the specific shape of electrode assembly 22. For example, if electrode assembly 22 is a cylindrical structure, the casing 211 can be selected as a cylindrical structure; and if the electrode assembly 22 is a cuboid structure, the casing 211 can be selected as a cuboid structure. Of course, the end cover 212 can also be of various structures, such as a plate-shaped structure or a hollow structure with an opening at one end. As an example, in FIG. 4, the casing 211 is in a cuboid structure.

It should be noted that the electrode assembly 22 is a component in the battery cell 20 that undergoes electrochemical reactions. The main body part 221 of the electrode assembly 22 can include a positive electrode plate, a negative electrode plate, and a separator. The main body part 221 of the electrode assembly 22 can be in a wound structure formed by winding the positive electrode plate, the separator, and the negative electrode plate, or a stacked structure formed by stacking the positive electrode plate, the separator, and the negative electrode plate. The tab 222 of electrode assembly 22 is a component formed by stacking and connecting the areas of the positive electrode plate that are not coated with the positive electrode active material layer, or the areas of the negative electrode plate that are not coated with the negative electrode active material layer.

Along the thickness direction X of the first wall, the tab 222 is provided at one end of the main body part 221 facing the first wall 2111, that is, the electrode component 22 is provided with an tab 222 near one end of the first wall 2111 in the thickness direction X of the first wall.

Optionally, one or multiple electrode assemblies 22 accommodated in the shell 21 can be provided. For example, in FIG. 4, there are two electrode assemblies 22, and the two electrode assemblies 22 are stacked along their thickness direction, that is, the two electrode assemblies 22 are stacked along the thickness direction of the battery cell 20. Of course, in other embodiments, the electrode assemblies 22 accommodated inside the shell 21 can also be stacked in three, four, five, or six layers.

In some embodiments, the battery cell 20 may further include a pressure relief mechanism installed on the shell 21. Optionally, the pressure relief mechanism may be provided on the end cover 212 or on the casing 211. The pressure relief mechanism is used to release the pressure inside the battery cell 20 when the pressure or temperature inside the battery cell 20 reaches a predetermined value. The pressure relief mechanism can be a component such as an explosion-proof valve, explosion-proof sheet, air valve, pressure relief valve, or safety valve.

In some embodiments, as shown in FIGS. 4 and 6, the battery cell 20 may further include a first insulating member 26, which is disposed between the mounting rack 25 and the first wall 2111 along the thickness direction X of the first wall to insulate and isolate the current collector component 24 and the first wall 2111.

For example, the material of the first insulating member 26 can be plastic, rubber, silicone, or the like.

In some embodiments, as shown in FIGS. 4 and 6, a lead out hole 2111a is provided on the first wall 2111, and the lead out hole 2111a penetrates both sides of the first wall 2111 along the thickness direction X of the first wall. The electrode column 23 is inserted into the lead out hole 2111a to install the electrode column 23 on the first wall 2111. One end of the electrode column 23 is used to connect with the current collector component 24, and the other end is used to connect with the busbar component of the battery 100, so as to achieve the input or output of electrical energy of the battery cell 20.

The electrode column 23 is insulated from and installed on the first wall 2111, that is, there is no electrical connection between the electrode column 23 and the first wall 2111.

Optionally, as shown in FIG. 6, the battery cell 20 may also include a second insulating member 27 and a sealing member 28. Along the thickness direction X of the first wall, the second insulating member 27 is provided on the side of the first wall 2111 facing away from the main body part 221, and is located between the electrode column 23 and the first wall 2111 to insulate and isolate the electrode column 23 from the first wall 2111. At least a portion of the sealing member 28 is set inside the lead out hole 2111a, and the sealing member 28 is used to seal the gap between the electrode column 23 and the hole wall of the lead out hole 2111a.

For example, the materials of the second insulating member 27 and the sealing member 28 can be various, such as plastic, rubber, or silicone.

In some embodiments, as shown in FIG. 4, the battery cell 20 may further include a third insulating member 29, which is wrapped around the outer side of the electrode assembly 22 to insulate and isolate the electrode assembly 22 from the shell 21.

For example, the third insulating member 29 is an insulation film wrapped around the electrode assembly 22, and the material of the third insulating member 29 can be plastic, rubber, silicone, or the like.

The current collector component 24 is configured to connect the electrode column 23 and the tab 222 of the electrode assembly 22, to achieve electrical connection between the electrode assembly 22 and the electrode column 23. The material of current collector component 24 can be various, such as copper, iron, aluminum, steel, aluminum alloy, etc.

The mounting rack 25 is positioned between the first wall 2111 and the main body part 221 in the thickness direction X of the first wall, providing installation and fixation for the current collector component 24. The connection method between the current collector component 24 and the mounting rack 25 can be various, such as snapping, bolt screwing, bonding, or injection molding of the mounting rack 25 onto the current collector component 24.

The material of mounting rack 25 is insulating material, which can be various, such as plastic, rubber, or silicone.

A mounting rack 25 is provided inside the shell 21, and the mounting rack 25 is located between the first wall 2111 and the main body part 221 of the electrode assembly 22 in the thickness direction X of the first wall. By connecting the current collector component 24 to the mounting rack 25, it can fix and support the current collector component 24. On the one hand, it can reduce the phenomenon of shaking or displacement of the current collector component 24 during use, which is conducive to reducing the risk of connection failure between the current collector component 24 and the electrode column 23 and the tab 222. On the other hand, it can stabilize the current collector component 24 through the mounting rack 25 when the tab 222 of the electrode assembly 22 is assembled into the shell 21 after being connected to the current collector component 24, so as to facilitate the assembly and connection between the current collector component 24 and the electrode column 23 installed on the first wall 2111, which is conducive to reducing the difficulty of assembly between the current collector component 24 and the electrode column 23, so as to improve the production efficiency of battery cells 20 and facilitate the improvement of the connection quality between the current collector component 24 and the electrode column 23, which ensures the production quality of battery cells 20.

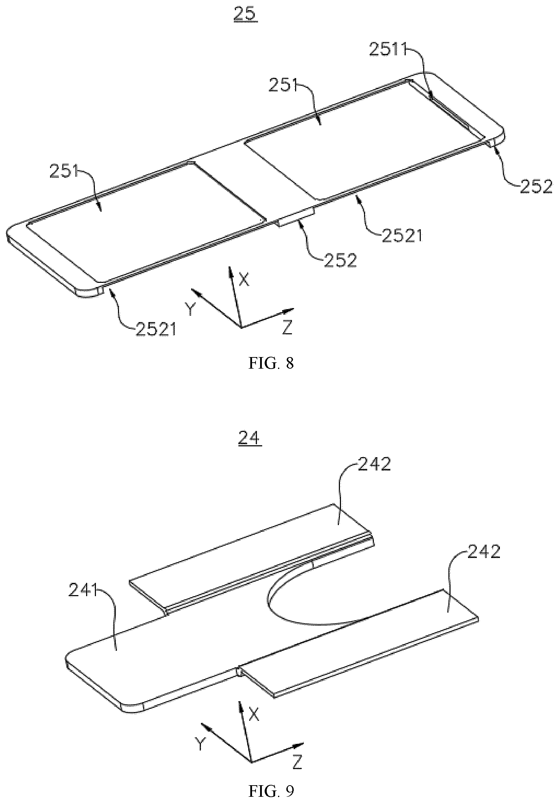

In accordance with some embodiments of the present disclosure, referring to FIG. 4 and further referring to FIGS. 7 and 8, FIG. 7 is a connection schematic view of the current collector component 24 and the mounting rack 25 provided in some embodiments of the present disclosure; and FIG. 8 is a schematic view of the structure of the mounting rack 25 provided in some embodiments of the present disclosure. The mounting rack 25 is provided with a mounting hole 251, wherein the mounting hole 251 penetrates the mounting rack 25 along the thickness direction X of the first wall, wherein at least a portion of the current collector component 24 is accommodated within the mounting hole 251.

Along the thickness direction X of the first wall, the mounting hole 251 runs through the mounting rack 25, that is, the mounting hole 251 extends along the thickness direction X of the first wall and runs through both sides of the mounting rack 25.

At least a part of the current collector component 24 is accommodated in the mounting hole 251, that is, the current collector component 24 can be partially accommodated in the mounting hole 251 or fully accommodated in the mounting hole 251. For example, in FIGS. 7 and 8, a portion of the current collector component 24 is inserted into the wall of the mounting hole 251, and another portion is accommodated in the mounting hole 251 to install the current collector component 24 on the mounting rack 25. Of course, in other embodiments, the current collector component 24 can also be connected to the wall surface of the mounting hole 251 through boding or bolt screwing, so as to achieve the accommodation of the overall current collector component 24 in the mounting hole 251.

For example, in FIG. 8, the shape of the mounting hole 251 is rectangular, and the width direction and length direction of the mounting hole 251 are the first direction Y and the second direction Z, respectively. The first direction Y, the second direction Z, and the thickness direction X of the first wall are perpendicular to each other. In some embodiments, the shape of the mounting hole 251 is not limited to this, and the shape of the mounting hole 251 may also be circular, elliptical, pentagonal, etc.

The mounting hole 251 is provided on the mounting rack 25 to accommodate the current collector component 24, and the mounting hole 251 penetrates both sides of the mounting rack 25 along the thickness direction X of the first wall, so as to facilitate the connection of the current collector component 24 with the electrode columns 23 and tabs 222 located on both sides of the mounting rack 25, thereby further reducing the assembly difficulty of battery cells 20 and improving the production efficiency of battery cells 20.

According to some embodiments of the present disclosure, referring to FIGS. 7 and 8 and further referring to FIG. 9, FIG. 9 is a structural schematic view of the current collector component 24 provided in some embodiments of the present disclosure. A slot 2511 is provided on the wall surface of the mounting hole 251, and the current collector component 24 comprises a first connecting part 241, wherein at least a portion of the first connecting part 241 is inserted into the slot 2511.

The slot 2511 is provided on the wall surface of the mounting hole 251, and the slot 2511 is set on one of the two opposite wall surfaces of the mounting hole 251 in the second direction Z. The first connecting part 241 of the current collector component 24 is inserted into the slot 2511 along the second direction Z. Of course, in other embodiments, the slot 2511 can also be provided on one of the two wall surfaces of the mounting hole 251 that are opposite to each other in the first direction Y.

At least a portion of the first connecting part 241 is inserted into the slot 2511, that is, the first connecting part 241 can be partially inserted into the slot 2511 of the mounting rack 25, or can be fully inserted into the slot 2511 of the mounting rack 25. For example, in FIG. 7, a portion of the first connecting part 241 is inserted into the slot 2511 of the mounting rack 25 to achieve a plug-in fit between the current collector component 24 and the mounting rack 25.

A slot 2511 is provided on the wall surface of the mounting hole 251 for inserting the first connecting part 241 of the current collector component 24, so as to connect the current collector component 24 to the wall surface of the mounting hole 251 and fix the current collector component 24 on the mounting rack 25. This structure is convenient for accommodating the current collector component 24 into the mounting hole 251 and for assembling the current collector component 24.

In some embodiments, as shown in FIG. 7, the mounting rack 25 is injection molded to connect the first connecting part 241 to a wall surface of the slot 2511.

The mounting rack 25 is injection molded so that the first connecting part 241 is connected to the slot wall surface of the slot 2511. That is to say, the mounting rack 25 is produced through injection molding technology, and during the injection molding process, the mounting rack 25 is directly formed onto the first connecting part 241 of the current collector component 24, so that the slot 2511 is formed on the hole wall surface of the mounting hole 251 of the mounting rack 25, and the slot wall surface of the slot 2511 is bonded to the first connecting part 241. Of course, in other embodiments, the mounting rack 25 can also be separately injection molded, and then the first connecting part 241 of the current collector component 24 is inserted into the slot 2511 to achieve the connection of the current collector component 24 to the mounting rack 25.

By setting the mounting rack 25 to be injection molded on the current collector component 24, the first connecting part 241 can be connected to the wall surface of the slot 2511, and a part of the mounting rack 25 is wrapped around the outer side of a part of the first connecting part 241, so that the mounting rack 25 forms a slot 2511 in the area where the first connecting part 241 is wrapped, that is, the first connecting part 241 and the wall surface of the slot 2511 are bonded together. The battery cell 20 using this structure can effectively improve the stability and reliability of the connection between the mounting rack 25 and the current collector component 24, thereby reducing the risk of shaking or detachment of the current collector component 24.

According to some embodiments of the present disclosure, as shown in FIGS. 4, 7, and 9, the current collector component 24 also includes a second connecting part 242. The second connecting part 242 is connected to the first connecting part 241, and the second connecting part 242 is connected to the tab 222. The portion of the first connecting part 241 is inserted into the slot 2511, and the portion of the first connecting part 241 located outside the slot 2511 is connected to the electrode column 23.

The part of the first connecting part 241 is inserted into the slot 2511, and the part of the first connecting part 241 located outside the slot 2511 is connected to the electrode column 23. That is, the first connecting part 241 has a part inserted into the slot 2511 and also has a part located in the mounting hole 251, so that the part of the first connecting part 241 located in the mounting hole 251 is used to connect with the electrode column 23.

For example, in FIG. 7, the first connecting part 241 extends along the second direction Z, and the first connecting part 241 is inserted into the slot 2511 along the second direction Z.

For example, in FIG. 9, the second connecting part 242 is connected to one side of the first connecting part 241 in the first direction Y. Of course, in other embodiments, the second connecting part 242 may also be connected to one end of the first connecting part 241 in the second direction Z.

Optionally, the first connecting part 241 and the second connecting part 242 can be integrated structures or split structures. If the first connecting part 241 and the second connecting part 242 are integrated structures, the first connecting part 241 and the second connecting part 242 can be manufactured and formed as a whole through processes such as casting and stamping. If the first connecting part 241 and the second connecting part 242 are of a split structure, the second connecting part 242 can be connected to the first connecting part 241 by welding or snapping. For example, in FIG. 9, the first connecting part 241 and the second connecting part 242 are integrated structures.

The current collector component 24 is provided with a first connecting part 241 connected to the electrode column 23 and a second connecting part 242 connected to the tab 222, so as to avoid the phenomenon of mutual interference between the area where the current collector component 24 is connected to the tab 222 and the area where the current collector component 24 is connected to the electrode column 23. In addition, by connecting the portion of the first connecting part 241 outside the slot 2511 to the electrode column 23, the area where the electrode column 23 and the current collector component 24 are connected to each other is closer to the position where the current collector component 24 and the mounting rack 25 are connected to each other, which is conducive to improving the stability and reliability of the assembly between the electrode column 23 and the current collector component 24, and enhancing the connection quality between the electrode column 23 and the current collector component 24.

In some embodiments, the second connecting part 242 is located within the mounting hole 251. That is to say, the second connecting part 242 is entirely located within the mounting hole 251.

By placing the second connecting part 242 as a whole in the mounting hole 251, it is convenient for the second connecting part 242 to be connected to the tab 222 of the electrode assembly 22 and can reduce the interference phenomenon between the second connecting part 242 and the main body part 221 of the electrode assembly 22.

In some embodiments, as shown in FIG. 4, along the thickness direction X of the first wall, the tab 222 abuts against the side of the second connecting part 242 facing the main body part 221.

The tab 222 abuts against the side of the second connecting part 242 facing the main body part 221, that is, after being connected to the second connecting part 242, the tab 222 can be in contact with the side of the second connecting part 242 facing the main body part 221 to provide support for the second connecting part 242.

The tab 222 is pressed against one side of the second connecting part 242 facing the main body part 221 in the thickness direction X of the first wall, so that the tab 222 can provide certain support to the second connecting part 242, and can provide certain support to the current collector component 24 when the electrode column 23 is assembled and connected to the first connecting part 241 of the current collector component 24. This is conducive to further improving the stability of the current collector component 24 connected to the mounting rack 25, reducing the deformation phenomenon of the current collector component 24 when assembled with the electrode column 23, and effectively improving the connection quality between the electrode column 23 and the first connecting part 241 of the current collector component 24.

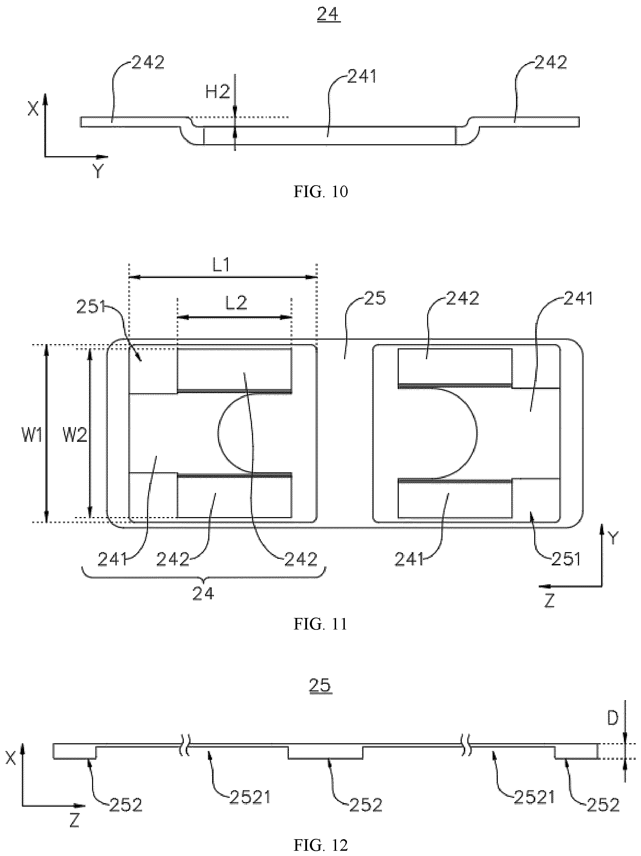

According to some embodiments of the present disclosure, referring to FIG. 9, and further referring to FIG. 10, FIG. 10 is a front view of the current collector component 24 in the second direction Z provided in some embodiments of the present disclosure. Along the thickness direction X of the first wall, the second connecting part 242 is further away from the main body part 221 than the first connecting part 241.

The second connecting part 242 is further away from the main body part 221 than the first connecting part 241, that is, in the thickness direction X of the first wall, there is a distance between the surface of the second connecting part 242 facing the main body part 221 and the surface of the first connecting part 241 facing the main body part 221, and the surface of the second connecting part 242 facing the main body part 221 is further away from the main body part 221 than the surface of the first connecting part 241 facing the main body part 221, so that the surface of the second connecting part 242 facing the main body part 221 and the surface of the first connecting part 241 facing the main body part 221 form a stepped surface.

By setting the second connecting part 242 of the current collector component 24 to be further away from the main body part 221 in the thickness direction X of the first wall compared to the first connecting part 241, the current collector component 24 can form a space for accommodating the tab 222 on one side of the second connecting part 242 facing the main body part 221, which is conducive to avoiding the phenomenon of the tab 222 being crushed by the second connecting part 242.

According to some embodiments of the present disclosure, as shown in FIGS. 4, 6, and 10, the battery cell 20 also includes a first insulating member 26. The first insulating member 26 is disposed between the mounting rack 25 and the first wall 2111 along the thickness direction X of the first wall to insulate and isolate the current collector component 24 and the first wall 2111. Along the thickness direction X of the first wall, a height of the electrode column 23 protruding from a surface of the first insulating member 26 facing the main body part 221 is H₁, and a height of the second connecting part 242 protruding from a surface of the first connecting part 241 facing away from the main body part 221 is H₂, satisfying a condition of H₁ ≥ H₂.

The height of the electrode column 23 protruding from a surface of the first insulating member 26 facing the main body part 221 is H₁, as shown in FIG. 6, that is, the electrode column 23 has a portion extending from the surface of the first insulating member 26 facing the main body part 221 in the thickness direction X of the first wall, and the dimension of this portion in the thickness direction X of the first wall is H₁.

The height of the second connecting part 242 protruding from a surface of the first connecting part 241 facing away from the main body part 221 is H₂, as shown in FIG. 10, that is, the second connecting part 242 extends out of the surface of the first wall 2111 facing away from the main body part 221 in the thickness direction X of the first wall, and the dimension extending out of the surface of the first wall 2111 facing away from the main body part 221 is H₂.

In the thickness direction X of the first wall, the size of the electrode column 23 extending out of the surface of the first insulating member 26 facing the main body part 221 is set to be greater than or equal to the size of the second connecting part 242 protruding from the surface of the first connecting part 241 facing away from the main body part 221. That is to say, when the electrode assembly 22 is assembled into the shell 21, the electrode column 23 will first abut against the first connecting part 241 of the current collector component 24, so that there is a gap of size greater than or equal to zero between the second connecting part 242 and the first insulating member 26, which is conducive to ensuring the connection quality between the electrode column 23 and the first connecting part 241, and avoiding the phenomenon of connection failure or inadequate connection due to the gap between the electrode column 23 and the first connecting part 241.

In some embodiments, as shown in FIGS. 6 and 10, along the thickness direction X of the first wall, a distance between a surface of the mounting rack 25 facing away from the main body part 221 and the surface of the first connecting part 241 facing away from the main body part 221 is H₃, satisfying a condition of H₁ ≥ H₃.

The distance between a surface of the mounting rack 25 facing away from the main body part 221 and the surface of the first connecting part 241 facing away from the main body part 221 is H₃, as shown in FIG. 6, that is, after the current collector component 24 is assembled into the mounting hole 251 of the mounting rack 25, the distance between the surface of the first connecting part 241 of the current collector component 24 facing the first insulating member 26 and the surface of the mounting rack 25 facing the first insulating member 26 is H₃.

In the thickness direction X of the first wall, the distance between the surface of the mounting rack 25 facing away from the main body part 221 and the surface of the first connection part 241 facing away from the main body part 221 is set to be less than or equal to the size of the electrode column 23 extending out of the surface of the first insulating member 26 facing the main body part 221. That is to say, the size of the electrode column 23 extending out of the surface of the first insulating member 26 facing the main body part 221 is greater than or equal to the distance between the surface of the mounting rack 25 facing the first insulating member 26 and the surface of the first connecting part 241 facing the first insulating member 26. This ensures that when the electrode assembly 22 is assembled into the shell 21, the electrode column 23 will first abut against the first connecting part 241 of the current collector component 24, resulting in a gap between the mounting rack 25 and the first insulating member 26 with a size greater than or equal to zero, which is conducive to ensuring the connection quality between the electrode column 23 and the first connecting part 241, so as to avoid the phenomenon of connection failure or inadequate connection due to the gap between the electrode column 23 and the first connecting part 241.

According to some embodiments of the present disclosure, as shown in FIGS. 4, 7, and 9, two electrode assemblies 22 are provided, and the two electrode assemblies 22 are stacked along the first direction Y, and the first direction Y is perpendicular to the thickness direction X of the first wall. The current collector component 24 comprises two second connecting parts 242, wherein along the first direction Y, the two second connecting parts 242 are respectively connected to both sides of the first connecting part 241, and the two second connecting parts 242 are respectively connected to tabs 222 of the two electrode assemblies 22.

The two second connecting parts 242 are respectively connected to tabs 222 of the two electrode assemblies 22, that is, the two tabs 222 with the same polarity of the two electrode assemblies 22 are respectively connected to the two second connecting parts 242 of the current collector component 24, so as to achieve the electrical connection of each of the two tabs 222 with the same polarity of the two electrode assemblies 22 to one current collector component 24.

It should be noted that in other embodiments, only one electrode assembly 22 may be provided, and correspondingly, only one second connecting part 242 may be provided for the current collector component 24. Of course, the electrode assemblies 22 can also be provided in a number of three, four, or five, etc. Correspondingly, the second connecting parts 242 of the current collector component 24 are set up in one-to-one correspondence with the electrode assemblies 22.

Two electrode assemblies 22 accommodated inside the shell 21 are provided, and the two electrode assemblies 22 are arranged along the first direction Y; and correspondingly, two second connecting parts 242 are provided on the current collector component 24, and the two second connecting parts 242 are respectively connected to both sides of the first connecting part 241 in the first direction Y, so as to achieve the simultaneous connection of the current collector component 24 with the tabs 222 of the two electrode assemblies 22, and to achieve parallel connection between the two electrode assemblies 22.

In some embodiments, referring to FIG. 7, and further referring to FIG. 11, FIG. 11 is a top view of the current collector component 24 connected to the mounting rack 25 provided in some embodiments of the present disclosure. A size of the mounting hole 251 in the first direction Y is W₁, and a distance between outer edges of the two second connecting parts 242 that are facing away from each other in the first direction Y is W₂, satisfying a condition of W₁>W₂.

The shape of the mounting hole 251 is rectangular, and the size of the mounting hole 251 in the first direction Y is W₁, that is, the width of the mounting hole 251 is W₁.

The distance between outer edges of the two second connecting parts 242 that are facing away from each other in the first direction Y is W₂, that is, the maximum size of the current collector component 24 in the first direction Y is W₂.

By setting the distance between the outer edges of the two second connecting parts 242 that are facing away from each other in the first direction Y to be smaller than the size of the mounting hole 251 in the first direction Y, that is, the size of the current collector component 24 in the first direction Y is smaller than the size of the mounting hole 251, it is beneficial to ensure that the current collector component 24 is assembled into the mounting hole 251 in the first direction Y and avoid the interference phenomenon between the current collector component 24 and the wall surface of the mounting hole 251 in the first direction Y.

In some embodiments, as shown in FIG. 11, one end of the first connecting part 241 in the second direction Z is inserted into the slot 2511, and the size of the mounting hole 251 in the second direction Z is L₁. The size of the second connecting part 242 in the second direction Z is L₂, satisfying a condition of L₁>L₂. The first direction Y, the second direction Z, and the thickness direction X of the first wall are perpendicular to each other.

The size of the mounting hole 251 in the second direction Z is L₁, that is, the length of the mounting hole 251 is L₁.

The dimension of the second connecting part 242 in the second direction Z is L₂, that is, the second connecting part 242 extends along the second direction Z, and the length of the second connecting part 242 in the second direction Z is L₂.

By setting the size of the second connecting part 242 in the second direction Z to be smaller than the size of the mounting hole 251, the second connecting part 242 can be assembled into the mounting hole 251 after the first connecting part 241 is inserted into the groove along the second direction Z, thereby avoiding the interference phenomenon between the second connecting part 242 and the wall surface of the mounting hole 251 in the second direction Z.

According to some embodiments of the present disclosure, as shown in FIG. 4 and 7, both the current collector components 24 and the electrode columns 23 are provided in a number of two, and the mounting rack 25 is provided with two mounting holes 251. The current collector components 24, the mounting holes 251, and the electrode columns 23 correspond one-to-one. The electrode assembly 22 has two tabs 222 with opposite polarities, which are respectively connected to two current collector components 24.

The electrode assembly 22 has two tabs 222 with opposite polarities, which are respectively used to output or input the positive and negative electrodes of electrode assembly 22.

Both the current collector components 24 and the electrode columns 23 are provided in a number of two, and the current collector components 24, the mounting holes 251, and the electrode columns 23 correspond one-to-one. The two tabs 222 are respectively connected to the two current collector components 24, that is, the two current collector components 24 and the two electrode columns 23 serve as the positive and negative output poles of the battery cell 20, respectively.

For example, in FIG. 7, two mounting holes 251 are arranged along the second direction Z, and correspondingly, two current collector components 24 are arranged at intervals and opposite to each other along the second direction Z, so as to facilitate the assembly of the current collector components 24 and the assembly and connection between the current collector components 24 and the tabs 222.

By setting two current collector components 24 and two mounting holes 251 arranged on the mounting rack 25, and assembling each current collector component 24 into one mounting hole 251, it is possible to achieve the stable installation of two current collector components 24 with opposite polarities on the mounting rack 25 at the same time, so as to facilitate the assembly of the two current collector components 24 and two electrode columns 23.

According to some embodiments of the present disclosure, referring to FIGS. 6 and 7, and further referring to FIG. 12, FIG. 12 is a front view of the mounting rack 25 in the first direction Y provided in some embodiments of the present disclosure. The mounting rack 25 has a first surface 252 facing the main body part 221 along the thickness direction X of the first wall, and the first surface 252 abuts against the main body part 221.

The mounting rack 25 has a first surface 252 facing the main body part 221, and the first surface 252 abuts against the main body part 221, that is, the mounting rack 25 is in contact with the main body part 221 of the electrode assembly 22 in the thickness direction X of the first wall.

By pressing the first surface 252 of the mounting rack 25 facing the main body part 221 against the main body part 221 of the electrode assembly 22, the main body part 221 can provide support for the mounting rack 25, thereby improving the structural stability of the mounting rack 25 assembled between the main body part 221 and the first wall 2111, further avoiding the phenomenon of shaking or displacement of the current collector component 24 inside the shell 21, and thus facilitating the further improvement of the connection quality between the current collector component 24 and the electrode column 23.

According to some embodiments of the present disclosure, as shown in FIGS. 8 and 12, the first surface 252 is provided with an avoidance groove 2521 for accommodating the tab 222.

The first surface 252 is provided with an avoidance groove 2521, that is, the surface of the mounting rack 25 that contacts the main body part 221 of the electrode assembly 22 in the thickness direction X of the first wall is provided with an avoidance groove 2521, so that the tab 222 can be accommodated in the avoidance groove 2521 to protect the tab 222.

For example, the electrode assembly 22 has two tabs 222 with opposite polarities, which are spaced apart along the second direction Z. Correspondingly, two avoidance grooves 2521 are provided on the first surface 252 of the mounting rack 25, and the two avoidance grooves 2521 are spaced apart along the second direction Z.

In some embodiments, as shown in FIG. 12, the thickness of the mounting rack 25 in the thickness direction X of the first wall is D, satisfying a condition of 1mm ≤ D ≤ 10mm. By setting the thickness of the mounting rack 25 between 1mm and 10mm, on the one hand, it can avoid the phenomenon of insufficient structural strength of the mounting rack 25 caused by the thickness of the mounting rack 25 being too small, thereby reducing the risk of breakage of the mounting rack 25 during assembly or use, and improving the support and stability effect of the current collector component 24. On the other hand, it can avoid the phenomenon of the mounting rack 25 occupying too much internal space of the battery cell 20 due to the thickness of the mounting rack 25 being too large, thereby improving the energy density of the battery cell 20.

The thickness of the mounting rack 25 in the thickness direction X of the first wall is D, that is, the distance between the first surface 252 of the mounting rack 25 and the surface of the mounting rack 25 facing away from the main body part 221 in the thickness direction X of the first wall is D.

For example, the thickness D of the mounting rack 25 in the thickness direction X of the first wall can be 1mm, 1.5mm, 2mm, 3mm, 5mm, 8mm, or 10mm, etc.

An avoidance groove 2521 for accommodating the tab 222 is provided on the first surface 252 of the mounting rack 25 facing the main body part 221 to avoid the pressing phenomenon caused by the mounting rack 25 on the tab 222, thereby reducing the risk of damage of the tab 222 or the tab 222 reversely inserting into the main body part 221.

According to some embodiments of the present disclosure, as shown in FIGS. 3, 4, and 5, the shell 21 may include a casing 211 and an end cover 212. The interior of the casing 211 forms an accommodating cavity 2112 with an opening 2113, and the electrode assembly 22 is accommodated in the accommodating cavity 2112. The end cover 212 covers the opening 2113. The casing 211 includes a first wall 2111.

The casing 211 includes a first wall 2111, which is a wall of the casing 211. The first wall 2111 can be a wall of the casing 211 that is opposite to the end cover 212 in the thickness direction X of the first wall, or can be a wall of the casing 211 adjacent to and in contact with the end cover 212. That is to say, the electrode column 23 is installed on the casing 211.

For example, in FIGS. 4 and 5, the first wall 2111 and the end cover 212 are arranged opposite each other in the thickness direction X of the first wall.

The casing 211 includes a first wall 2111, that is, the electrode column 23 is installed on the casing 211, so that the current collector component 24 can achieve electrical connection between the electrode column 23 and the electrode assembly 22 after connecting the electrode column 23 and the tab 222 of the electrode assembly 22, to achieve the input or output of electrical energy of the battery cell 20. The battery cell 20 using this structure can avoid the phenomenon of force being transmitted to the casing 211 and end cover 212 through the electrode column 23 when the busbar component pulls or twists the electrode column 23, thereby effectively avoiding the situation of pulling between the end cover 212 and the casing 211, reducing the risk of electrolyte leakage caused by connection failure between the end cover 212 and the casing 211, and thus improving the use safety and service life of the battery cell 20 during use.

In some embodiments, as shown in FIGS. 4, 5, and 6, the casing 211 also includes a second wall 2114. The second wall 2114 is arranged around the first wall 2111, and along the thickness direction X of the first wall, one end of the second wall 2114 is connected to the first wall 2111, and the other end forms an opening 2113. The second wall 2114 and the first wall 2111 jointly define the accommodating cavity 2112, and the first wall 2111 is arranged opposite to the end cover 212.

The second wall 2114 is a hollow structure that is open at both ends in the thickness direction X of the first wall, so that one end of the second wall 2114 in the thickness direction X of the first wall forms an opening 2113, and the other end is connected to the first wall 2111 to jointly define the accommodating cavity 2112 for accommodating the electrode assembly 22.

The end cover 212 covers the opening 2113 formed by the second wall 2114, and the end cover 212 is arranged opposite to the first wall 2111 in the thickness direction X of the first wall. This structure can make the first wall 2111 equipped with the electrode column 23 away from the end cover 212 of the shell 21, so that there is no direct connection relationship between the first wall 2111 and the end cover 212. This can further avoid the phenomenon of the generated force acting on the end cover 212 when the busbar component pulls or twists the electrode column 23, thereby reducing the risk of connection failure between the end cover 212 and the casing 211, and further reducing the risk of electrolyte leakage of the battery cell 20 during use.

According to some embodiments of the present disclosure, the casing 211 is integrally formed. That is to say, the first wall 2111 and the second wall 2114 of the casing 211 are integrally formed, that is, the first wall 2111 and the second wall 2114 are an integrated structure.

For example, the casing 211 can be integrally formed using processes such as casting and stamping.

The casing 211 is a one-piece structure, which can enhance the structural strength of the casing 211 itself, so as to avoid the phenomenon of cracking the casing 211 caused by transmitting force through the electrode column 23 to the casing 211 when the busbar component pulls or twists the electrode column 23, and effectively reduce the risk of electrolyte leakage of the battery cell 20 during use, which is conducive to improving the use safety and service life of the battery cell 20.

According to some embodiments of the present disclosure, as shown in FIG. 4, 5, and 6, the battery cell 20 further includes a first insulating member 26. The first insulating member 26 is disposed between the mounting rack 25 and the first wall 2111 along the thickness direction X of the first wall to insulate and isolate the current collector component 24 and the first wall 2111.

The first insulating member 26 is arranged between the mounting rack 25 and the first wall 2111 of the casing 211 in the thickness direction X of the first wall, to provide insulation and isolation effects for the current collector component 24 and the first wall 2111. The material of the first insulating member 26 can be various, such as rubber, plastic, or silicone.

A first insulating member 26 is also provided between the mounting rack 25 and the first wall 2111, so as to provide insulation and isolation between the current collector component 24 and the first wall 2111 through the first insulating member 26, thereby effectively reducing the risk of short circuit between the current collector component 24 and the first wall 2111, and improving the use safety of battery cell 20.

According to some embodiments of the present disclosure, the present disclosure also provides a battery 100, including the battery cells 20 in any one of the above solutions.

According to some embodiments of the present application, the present application also provides an electrical device, including a battery 100 in any one of the above solutions, and the battery 100 is used to provide electrical energy to the electrical device.

The electrical equipment can be any of the aforementioned equipment or systems that use battery 100.

According to some embodiments of the present disclosure, as shown in FIGS. 3 to 12, the present disclosure provides a battery cell 20, which includes a shell 21, an electrode assembly 22, an electrode column 23, a mounting rack 25, a current collector component 24, and a first insulating member 26. The shell 21 includes a casing 211, which has a first wall 2111 and a second wall 2114. The second wall 2114 surrounds the first wall 2111, and along the thickness direction X of the first wall, one end of the second wall 2114 is connected to the first wall 2111, and the other end forms an opening 2113. The second wall 2114 and the first wall 2111 jointly define an accommodating cavity 2112. The end cover 212 covers the opening 2113, and the end cover 212 is arranged opposite to the first wall 2111 along the thickness direction X of the first wall. The electrode assembly 22 is accommodated in the accommodating cavity 2112. The electrode assembly 22 includes a main body part 221 and a tab 222. Along the thickness direction X of the first wall, the tab 222 is arranged at one end of the main body part 221 facing the first wall 2111. There are two electrode assemblies 22, and the main body parts 221 of the two electrode assemblies 22 are stacked along the first direction Y. The electrode column 23 is installed on the first wall 2111. Along the thickness direction X of the first wall, the mounting rack 25 is installed between the first wall 2111 and the main body part 221. The mounting rack 25 is provided with mounting holes 251, which penetrate the mounting rack 25 along the thickness direction X of the first wall. A slot 2511 is provided on the wall surface of the mounting hole 251. Along the thickness direction X of the first wall, the mounting rack 25 has a first surface 252 facing the main body part 221. The first surface 252 abuts against the main body part 221, and an avoidance groove 2521 is provided on the first surface 252 for accommodating the tab 222. The current collector component 24 includes a first connecting part 241 and two second connecting parts 242 connected to both sides of the first connecting part 241 in the first direction Y. The first connecting part 241 is partially inserted into the slot 2511, and the part of the first connecting part 241 outside the slot 2511 is connected to the electrode column 23. The two second connecting parts 242 are respectively connected to the tabs 222 of the two electrode assemblies 22, and both second connecting parts 242 are located in the mounting holes 251. Along the thickness direction X of the first wall, the tabs 222 are in contact with the side of the second connecting part 242 facing the main body part 221. The mounting rack 25 is formed by injection molding, so that the first connecting part 241 is connected to the slot wall surface of slot 2511. The first insulating member 26 is disposed between the mounting rack 25 and the first wall 2111 along the thickness direction X of the first wall to insulate and isolate the current collector component 24 and the first wall 2111.

It should be noted that in the absence of conflicts, the embodiments and the features in the embodiments in the present application can be combined with each other.

The above is only preferred embodiments of the present disclosure and is not intended to limit it. For those skilled in the art, the present disclosure may undergo various modifications and variations. Any modifications, equivalent replacements, improvements, etc. made within the spirit and principles of the present disclosure shall be included within the scope of protection of the present disclosure.

## Claims

1. A battery cell, comprising:
a shell, comprising a first wall;
an electrode assembly, accommodated inside the shell, and comprising a main body part and a tab, wherein along a thickness direction of the first wall, the tab is arranged at one end of the main body part facing the first wall;
an electrode column, installed on the first wall;
a current collector component, connecting the electrode column and the tab; and
a mounting rack, wherein along the thickness direction of the first wall, the mounting rack is arranged between the first wall and the main body part, and the current collector component is connected to the mounting rack.

2. The battery cell according to claim 1, wherein the mounting rack is provided with a mounting hole, wherein the mounting hole penetrates the mounting rack along the thickness direction of the first wall; and
at least a portion of the current collector component is accommodated within the mounting hole.

3. The battery cell according to claim 2, wherein a slot is provided on a wall surface of the mounting hole, and the current collector component comprises a first connecting part, wherein at least a portion of the first connecting part is inserted into the slot.

4. The battery cell according to claim 3, wherein the mounting rack is injection molded to connect the first connecting part to a wall surface of the slot.

5. The battery cell according to claim 3 or 4, wherein the current collector component further comprises:
a second connecting part, connected to the first connecting part, wherein the second connecting part is connected to the tab; and
a portion of the first connecting part is inserted into the slot, and a portion of the first connecting part located outside the slot is connected to the electrode column.

6. The battery cell according to claim 5, wherein the second connecting part is located inside the mounting hole.

7. The battery cell according to claim 5 or 6, wherein along the thickness direction of the first wall, the tab abuts against one side of the second connecting part facing the main body part.

8. The battery cell according to any one of claims 5-7, wherein along the thickness direction of the first wall, the second connecting part is further away from the main body part than the first connecting part.

9. The battery cell according to claim 8, wherein the battery cell further comprises:
a first insulating member, wherein along the thickness direction of the first wall, the first insulating member is arranged between the mounting rack and the first wall to insulate and isolate the current collector component from the first wall; and
along the thickness direction of the first wall, a height of the electrode column protruding from a surface of the first insulating member facing the main body part is H₁, and a height of the second connecting part protruding from a surface of the first connecting part facing away from the main body part is H₂, satisfying a condition of H₁ ≥ H₂.

10. The battery cell according to claim 9, wherein along the thickness direction of the first wall, a distance between a surface of the mounting rack facing away from the main body part and the surface of the first connecting part facing away from the main body part is H₃, satisfying a condition of H₁ ≥ H₃.

11. The battery cell according to any one of claims 5-10, wherein two electrode assemblies are provided, and the two electrode assemblies are stacked along a first direction, wherein the first direction is perpendicular to the thickness direction of the first wall; and
the current collector component comprises two second connecting parts, wherein along the first direction, the two second connecting parts are respectively connected to both sides of the first connecting part, and the two second connecting parts are respectively connected to tabs of the two electrode assemblies.

12. The battery cell according to claim 11, wherein a size of the mounting hole in the first direction is W₁, and a distance between outer edges of the two second connecting parts that are facing away from each other in the first direction is W₂, satisfying a condition of W₁>W₂.

13. The battery cell according to claim 11 or 12, wherein one end of the first connecting part in a second direction is inserted into the slot, a size of the mounting hole in the second direction is L₁, and a size of the second connecting part in the second direction is L₂, satisfying a condition of L₁>L₂, wherein the first direction, the second direction, and the thickness direction of the first wall are perpendicular to each other.

14. The battery cell according to any one of claims 2-13, wherein both the current collector components and the electrode columns are provided in a number of two, and the mounting rack is provided with two mounting holes, wherein the current collector components, the mounting holes, and the electrode columns correspond one-to-one; and
the electrode assembly has two tabs with opposite polarities, wherein the two tabs are respectively connected to the two current collector components.

15. The battery cell according to any one of claims 1-14, wherein the mounting rack has a first surface facing the main body part along the thickness direction of the first wall, and the first surface abuts against the main body part.

16. The battery cell according to claim 15, wherein an avoidance groove is provided on the first surface, wherein the avoidance groove is configured for accommodating the tab.

17. The battery cell according to any one of claims 1-16, wherein the shell comprises:
a casing, wherein an accommodating cavity with an opening is formed inside the casing, and the electrode assembly is accommodated in the accommodating cavity; and
an end cover, covering the opening, wherein
the casing comprises the first wall.

18. The battery cell according to claim 17, wherein the casing is integrally formed.

19. The battery cell according to claim 17 or 18, wherein the casing further comprises:
a second wall, wherein the second wall is arranged around the first wall, and along the thickness direction of the first wall, one end of the second wall is connected to the first wall, and the other end forms the opening, wherein the second wall and the first wall jointly define the accommodating cavity, and the first wall is arranged opposite to the end cover.

20. The battery cell according to any one of claims 1-19, wherein the battery cell further comprises:
a first insulating member, wherein along the thickness direction of the first wall, the first insulating member is arranged between the mounting rack and the first wall to insulate and isolate the current collector component from the first wall.

21. A battery, comprising the battery cell according to any one of claims 1-20.

22. An electrical equipment, comprising the battery according to claim 21.
